# EUROPÄISCHE PATENTANMELDUNG

(11) **EP 2 405 196 A1**
(43) Veröffentlichungstag der Anmeldung: **11.01.2012**
(21) Anmeldenummer: 09005279.6
(22) Anmeldetag: 11.04.2009
(51) Int. Cl.: F23C 7/06, F23C 7/08, F01K 13/00

(54) **Externe Frischluftvorwärmung bei Feststofffeuerungen**

(30) Priorität: 19.09.2008 DE 102008048097; 20.12.2008 DE 102008064321
(71) Anmelder: EcoEnergy Gesellschaft für Energie- und Umwelttechnik mbH, 37445 Walkenried (DE)
(72) Erfinder: Schu, Reinhard, 37445 Walkenried (DE)
(74) Vertreter: Vomberg, Friedhelm

(57) **Zusammenfassung**

Die Erfindung betrifft ein Verfahren zur Nutzung der Wärme im unteren Temperaturbereich bis 1.000°C, vorzugsweise bis 500°C zur Vorwärmung der Frischluft, die einer Feststofffeuerung, vorzugsweise ausgeführt als Rostfeuerung mit unterstöchiometrischer Verbrennung und einer Frischluftzugabe in mehreren Stufen oder die einer zirkulierenden Wirbelschichtfeuerung zugegeben wird.

## Beschreibung

Die Erfindung betrifft ein Verfahren zur Nutzung der Wärme im unteren Temperaturbereich bis 1000°C, vorzugsweise bis 500°C als vorgewärmte Luft in einer Festbrennstofffeuerung.

Es ist bekannt, dass in Verbrennungsprozessen Frischluft auf hohe Temperaturen bis 2000°C erwärmt werden kann, wobei der in der Frischluft enthaltene Sauerstoff einerseits als Oxidationsmittel verwertet und darüber hinaus die Frischluft selbst als Stoff benutzt wird, der ein anderes Medium aufheizen soll, insbesondere zur Energiespeisung eines Wasser-Dampf-Kreislaufes über einen Wärmetauscher, wobei der erzeugte Dampf zum Antrieb einer Turbine verwendet wird.

Die meisten Verbrennungsanlagen, insbesondere Ersatzbrennstoffanlagen, in denen Hausmüll oder Biomasse verbrannt werden, besitzen Dampfkessel zur Erzeugung von Mitteldruckdampf (bis 60 bar). Die Notwendigkeit zur Beschränkung der Temperatur resultiert aus der bei den eingesetzten Werkstoffen verstärkt auftretenden Hochtemperaturkorrosion bei Dampftemperaturen von oberhalb 370°C bis 400°C. Diese Korrosionserscheinungen können dazu führen, dass Dampfüberhitzer schon nach kurzer Betriebszeit von 3 bis 12 Monaten erneuert werden müssen. Aus Müllverbrennungsanlagen sind Korrosions- und Verschlackungsprobleme bekannt, aufgrund derer die Temperatur im Verbrennungsraum begrenzt werden muss.

Nach dem Stand der Technik sind auch Biothermie-, Solarthermie- und Kernkraftwerke zur Stromgewinnung bekannt, die ebenso wie Müllverbrennungsanlagen sowie Anlagen, die Abwärme aus exothermen chemischen Prozessen nutzen, in der maximal erzielbaren Temperatur beschränkt sind, um mit hohem Wirkungsgrad, entsprechend der Lehre von Carnot, Wärme in Strom umzusetzen.

In der Verbindung von Prozessen mit limitierter Temperatur der freiwerdenden Wärme und dem Verbrennungsprozess mit nicht oder nur gering limitierten Brennstoffen wie z. B. Kohle, Öl, Gas oder gering belasteten Biomassen besteht ein Vorteil. Für den Verbrennungsprozess mit derartigen Brennstoffen ist der energetische und apparative Aufwand fast unabhängig von dem Temperaturbereich der Lufterwärmung. So kann mit Erdgas Luft beispielsweise auf 150 °C erwärmt werden, um schonende Trocknungsprozesse einzuleiten oder auf Temperaturen von 1600 °C bis 2000 °C, wenn vorgewärmte Luft weiter erhitzt wird.

Aufgrund des in der Kraftwerkstechnik in der Entwicklung gestiegenen Dampfdruckes und der damit verbundenen Möglichkeit der immer höheren Speisewasservorwärmung kann meist das Abgas nur bis knapp oberhalb der Speisewassertemperatur abgekühlt werden. Durch die Verwendung von überkritischem Dampf sind der Speisewasservorwärmung bezogen auf die Eigenschaften des Wassers keine Grenzen mehr gesetzt. Energetisch ist eine regenerative Frischluftvorwärmung erforderlich und üblich, somit werden die Abgase weiter abgekühlt und die Abgasverluste minimiert. Die so zurückgeführte Abgaswärme verdrängt direkt Brennstoffwärme und stellt somit eine der effektivsten Maßnahmen der Wirkungsgradsteigerung in Kraftwerken dar.

Feuerungstechnisch sind der Frischluftvorwärmung besonders bei heizwertreichen festen Brennstoffen Grenzen gesetzt, da mit der Frischluftvorwärmung auch gleichzeitig die adiabate Feuerungstemperatur steigt, womit sich auch Probleme bezüglich der Verschlackung, Korrosion sowie dem Material von Feuerfestauskleidungen ergeben.

Eine hohe externe Frischluftvorwärmung wurde bisher nur bei Feuerungssystemen mit den Brennstoffen Öl und Gas durchgeführt. Die Brennstoffkosten sind jedoch hoch und nur noch begrenzte Zeit verfügbar, weshalb nach Ersatzlösungen zu suchen ist. Beispielsweise werden Solarthermiekraftwerke zur Luftvorwärmung bei Gasturbinenkraftwerken eingesetzt. Um für Solarthermiekraftwerke eine Subventionierung zu erhalten, sind maximale fossile Zufeuerungsraten festgelegt worden, die eine Kombination von Gasturbinenprozessen mit Solarthermiekraftwerken von der Subventionierung ausschließt.

Feststofffeuerungssysteme mit vorzugsweise sogar regenerativer Biomasse, die eine externe Frischluftvorwärmung nutzen, sind bisher nicht bekannt und Gegenstand dieser Erfindung.

Voraussetzung für diese Feuerungssysteme ist eine flexible Temperatursteuerung im Feuerraum, die eine Begrenzung der maximalen Feuerraumtemperatur ermöglichen, dazu wird die Feuerung mit einer zirkulierenden Wirbelschicht und die bewusste unterstöchiometrische Verbrennung mit nachträglicher Nachverbrennung des erzeugten Armgases mit Stufenluft in einer Rostfeuerung vorgeschlagen.

Grundsätzlich nach dem Stand der Technik bekannt sind Feststofffeuerungssysteme, bei denen das Brenngut zunächst unterstöchiometrisch verbrannt wird und erst in der letzten Stufe das in der ersten Stufe erzeugte Armgas bzw. Rauchgas vollständig verbrannt wird. Hierzu wird Luft stufenweise zugegeben. Diese Feuerungstechnologie für Festbrennstoffe, die z. B. in Form einer Rostfeuerung, Staubfeuerung oder Schwebewurffeuerung praktiziert wird, erlaubt es, die Realtemperaturen im Feuerungsraum zu reduzieren und damit Flexibilität für eine höhere Frischluftvorwärmung zu erzielen. Bekannt ist beispielsweise die Strohfeuerung im Kraftwerk Avedøre, Dänemark und das Ersatzbrennstoffkraftwerk Södertälje, Schweden, mit mehrfacher Stufenluftzugabe.

Es ist Aufgabe der vorliegenden Erfindung, ein Verfahren mit einer optimierten Feuerungstechnik für vorrangig feste Brennstoffe mit der Möglichkeit der maximalen internen und externen Frischluftvorwärmung anzugeben.

Diese Aufgabe wird durch das Verfahren nach Anspruch 1 gelöst. Weiterbildungen der Erfindung sind in den Unteransprüchen beschrieben.

Der Kerngedanke der vorliegenden Erfindung besteht darin, dass eine Frischluftvorwärmung mit einer Rostfeuerung mit unterstöchiometrischer Verbrennung und einer mehrfachen Luftstufung oder mit einer zirkulierenden Wirbelschichtfeuerung kombiniert wird.

Vorzugsweise wird bei der Befeuerung auf Festbrennstoffe wie Biomassen, Industrie- oder kommunale Abfälle, Kohle oder Mischungen aus diesen Stoffen zurückgegriffen.

Bevorzugt wird zur Vorwärmung der Frischluft Geothermie-, Solarthermie- oder Wärme aus der Abfallverbrennung und Abwärme-Energie aus exothermen Prozessen verwendet. Als Abwärme kommt beispielsweise eine ungenutzte Fernwärme in Warmperioden, z. B. im Sommer in Betracht. Durch Nutzung solcher Fernwärme kann beispielsweise eine Vorwärmung der Luft auf 80 °C bis 150 °C erreicht werden, die entsprechend dem Vorwärmepotential Energie einsparen lässt, die ansonsten ungenutzt bliebe. Ferner könnte selbst in nördlichen Breitengraden durch Sonnenkollektoren in einem effektiven Verbrennungsprozess eines modernen Biomassekraftwerkes Energie eingebracht werden, die dort mit einem Wirkungsgrad von über 35% bei der Erzeugung von elektrischer Energie nutzbar ist. In Verbrennungsprozessen lässt sich die Abwärme, die aus dem Abgas genommen werden kann, wirkungsvoll zur Frischluftvorwärmung einsetzen, was effektiver ist, als diese Energie zur Kondensatwärmung im Wasser-Dampfkreislauf zu verwenden. Bei Rostverbrennungsanlagen wird vorgewärmte Frischluft gestuft zugegeben, wobei der Verbrennungsprozess über lange Zeit unterstöchiometrisch durchgeführt und erst in den letzten Stufen das Brenngut vollständig verbrannt wird. Beispielsweise lässt sich in einer Rostverbrennungsanlage eine mittlere Temperatur von ca. 900 °C dadurch aufrechterhalten, dass nach der Primärluftzugabe die weitere Luft als Sekundär-, Tertiär-, Quartär- und Quintärluft zugegeben wird, womit eine Temperaturführung zwischen 850 °C und 950 °C idealisiert ermöglicht werden soll.

Die bestverfügbare Verbrennungstechnologie zur Frischluftvorwärmung stellt die zirkulierende Wirbelschichtverbrennung (ZWS) dar. Hierbei erfolgt die Kühlung durch die zirkulierende Asche über einen Fließbettkühler, wodurch bis zu 80% der Feuerungswärmeleistung über die Aschekühlung bei einem optimalen Temperaturniveau von 500 °C bis 750 °C ausgekoppelt werden können. Bei der ZWS ist eine Frischluftvorwärmung bis max. 750 °C für die Primärluft und bis zu max. 1000 °C für die Sekundärluft möglich.

Aus der Solarthermie sind z. B. Solartürme mit Heliostatfeldern zur Strahlungsbündelung und Receivem bekannt, die entweder direkt Luft auf Temperaturen von 700 °C bis 1.000 °C vorwärmen oder über einen Thermalölkreislauf mit Austrittstemperaturen von fast 400 °C oder auch nach dem heutigen Stand der Technik mit Salzschmelzen bis 565 °C Austrittstemperatur erreichen, um eine externe Frischluftvorwärmung durchführen zu können.

Weitere Vorteile oder Ausführungsvarianten werden im Folgenden anhand der Zeichnungen beschrieben: Es zeigen:

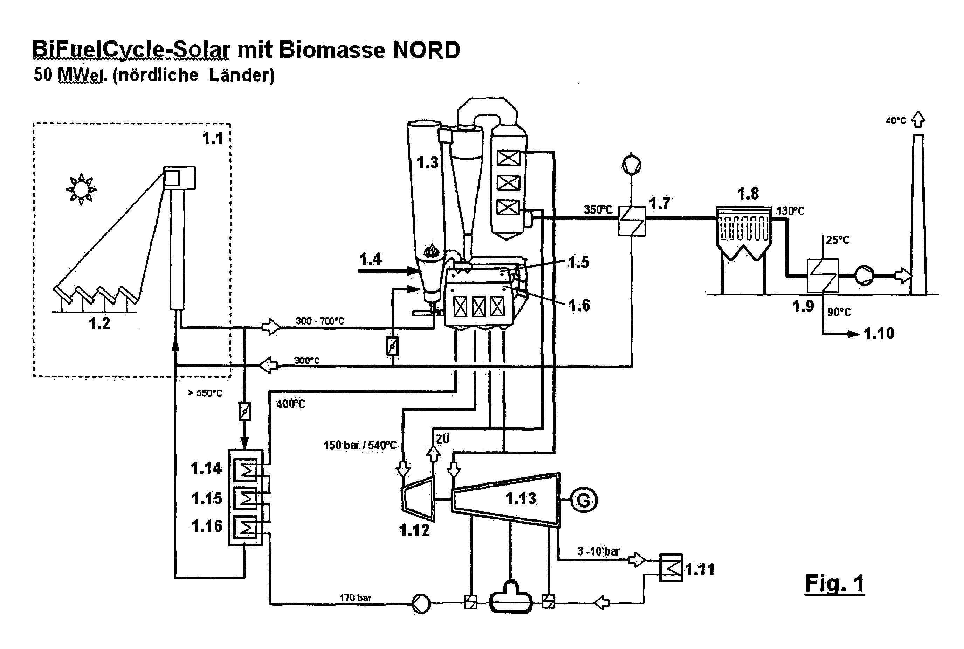

- Fig.1-3: jeweils Prinzipskizzen von unterschiedlichen Anlagen zur Durchführung des erfindungsgemäßen Verfahrens.

Fig. 1 zeigt die Kombination einer Solarthermieanlage mit einer biomassegefeuerten ZWS. In einem Solarfeld 1.2 wird die Strahlung zu einem Solarturm 1.1 reflektiert, der zur Vorwärmung der Luft auf 300 °C bis 700 °C dient, die als vorgewärmte Frischluft einer ZWS-Anlage 1.3 zugeführt wird. Die dabei entstehende Wärme wird über einen Fließbettkühler und einen Abhitze-Überhitzer an den Sattdampf übergeben, wonach der überhitzte Dampf zur Energieerzeugung an eine Turbine 1.13 geführt wird. Das Kondensat gelangt über einen Vorwärmer zurück zur Speisewasserpumpe. Das Abgas wird in einem Luftvorwärmer 1.7 abgekühlt, wobei die Abgastemperatur von 350 °C auf Werte um 130 °C abgesenkt wird, um die Abgasreinigung und Minimierung der Abgasverluste zu ermöglichen. Die über den Luftvorwärmer 1.7 dem Solarturm zugeführte Frischluft ist auf ca. 300 °C vorgewärmt.

Die Restwärme, die in dem Abgas enthalten ist, das den Gewebefilter verlässt, wird über einen weiteren Luftvorwärmer zur Trocknung der Biomasse verwendet, die später als Brennstoff der ZWS-Anlage zugeführt wird.

Bei der in Fig. 1 dargestellten Technologie wird bis zu 80% der Feuerungswärmeleistung über die Aschekühlung bei einem optimalen Temperaturniveau von 500 °C bis 750 °C ausgekoppelt. Die Frischluftvorwärmung ist bis zu max. 700 °C für die Primärluft und bis zu max. 1000 °C für die Sekundärluft möglich. Der Vorteil der in Fig. 1 dargestellten Anlage besteht darin, dass über die externe Frischluftvorwärmung der Biomassebedarf zur externen Dampfüberhitzung minimiert werden kann.

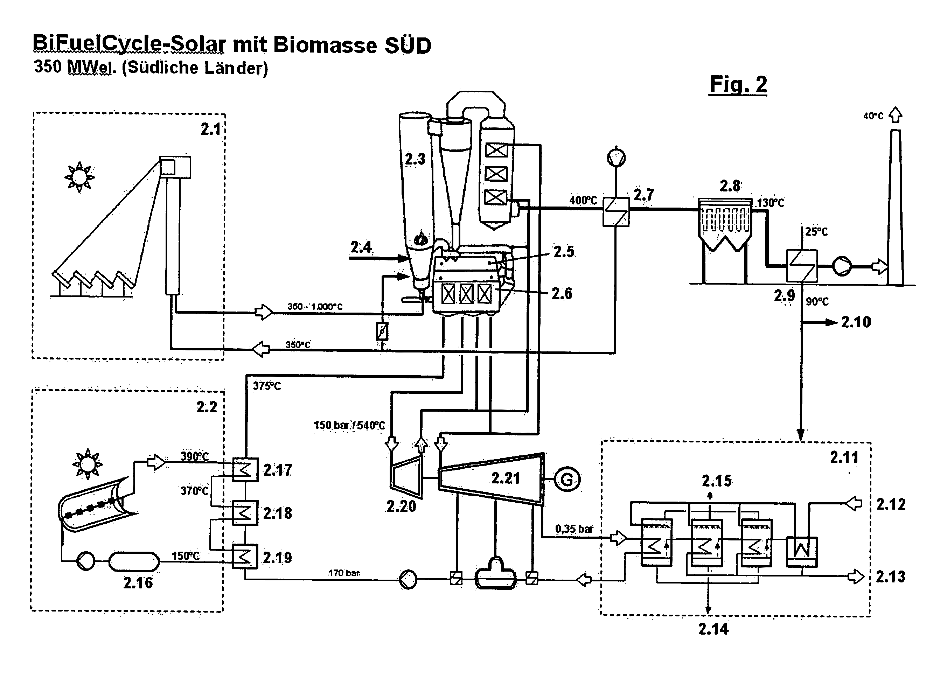

Fig. 2 zeigt die Kombination der vorerwähnten Anlage mit solarer Meerwasserentsalzung (MED). Das erzeugte Frischwasser ist ausreichend zur Bewässerung für den Biomasseanbau, so dass auch die für die Zwischenüberhitzung verwendete Biomasse lokal vor Ort erzeugt werden kann. Zusätzlich sind noch Parabolrinnen 2.2 vorgesehen, die mit Thermalöl beschickt werden, das auf ca. 390 °C solar erwärmt und wie üblich zur Dampferzeugung und Teilüberhitzung des Dampfes genutzt wird. Die letzte Überhitzungsstufe wird durch die Verbrennungsanlage ermöglicht, die wiederum mit einer externen solaren Frischluftvorwärmung betrieben wird. Der den Turbinen zugeführte Frischdampf hat eine Temperatur von 540° C bei einem Druck von 150 bar.

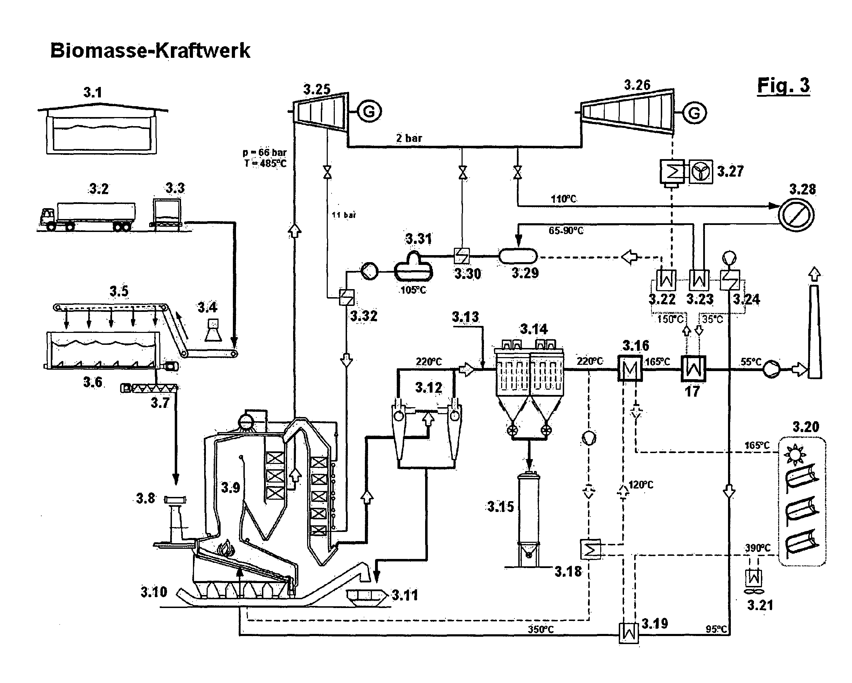

Bei der in Fig. 3 dargestellten Anlage wird die Frischluft durch einen Wärmeaustausch mit dem Abgas auf ca. 165 °C vorgewärmt. Mittels eines heißen Thermalöles aus einem Parabolrinnen-Solarfeld wird die vorgewärmte Luft weiter bis auf 350°C erhitzt. Als Verbrennungsofen dient eine Rostfeuerungsanlage mit mehrfacher Luftstufung, wobei in jeder Luftzugabe vorgewärmte Frischluft zugeführt wird. Als Brennstoff dient auch hier Biomasse.

Ein weiteres Anwendungsbeispiel ist die Nutzung der Abwärme einer kleinen Abfallverbrenungsanlage zur Vorwärmung der Sekundärluft eines Kohlekraftwerkes nach der kraftwerksinternen Frischluftvorwärmung. Die Abfallverbrennung wird als stationäre Wirbelschichtverbrennung für mechanisch entwässerten Klärschlamm ausgeführt, die einer hohen interne Frischluftvorwärmung bedarf. Fast die komplette Verbrennungswärme kann über Thermalöl oder Salzschmelzen bei Temperaturen von 300 °C - 500 °C abgeführt werden und zur Frischluftvorwärmung des Kohlekraftwerkes genutzt werden. Der Brutto-Wirkungsgrad der Abfallverbrennung entspricht dann ungefähr dem des Kohlekraftwerkes.

**Bezugszeichenliste:**

| | | | |
|---|---|---|---|
| 1.1 | Solarturm | 1.9 | Restwärme-Wärmetauscher |
| 1.2 | Solarfeld | 1.10 | Biomassetrocknung |
| 1.3 | ZWS | 1.11 | Wärme- / Kälteversorgung |
| 1.4 | Biomasse (30% - 100%) | 1.12 | Hochdruckturbine (HD) |
| 1.5 | Überhitzer, Verdampfer, Eco | 1.13 | Niedrigdruckturbine (ND) |
| 1.6 | Überhitzer, Zwischenüberhitzer | 1.14 | Überhitzer (ÜH) |
| 1.7 | Luftvorwärmer (Luvo) | 1.15 | Verdampfer (VD) |
| 1.8 | Gewebefilter | 1.16 | Eco |
| | | | |
| 2.1 | Solarturm | 2.12 | Meerwasser |
| 2.2 | Parabolrinnen | 2.13 | Frischwasser |
| 2.3 | ZWS | 2.14 | Vakuum |
| 2.4 | Biomasse (30% - 10%) | 2.15 | Soleablauf |
| 2.5 | Überhitzer, Verdampfer, Eco | 2.16 | Thermalölausdehnungsbehälter |
| 2.6 | Überhitzer, Zwischenüberhitzer | 2.17 | Überhitzer (ÜH) |
| 2.7 | Luftvorwärmer (Luvo) | 2.18 | Verdampfer (VD) |
| 2.8 | Gewebefilter | 2.19 | Eco |
| 2.9 | Restwärme-Wärmetauscher | 2.20 | Hochdruckturbine (HD) |
| 2.10 | Biomassetrocknung | 2.21 | Turbine |
| 2.11 | Multieffect Desalination (MED) | | |
| | | | |
| 3.1 | Notlager | 3.17 | Restwärmenutzung |
| 3.2 | Anlieferung | 3.18 | Wärmetauscher (Rezi-VW) |
| 3.3 | Dockingstation | 3.19 | Luftvorwärmer (Luvo) |
| 3.4 | Metalldetektor | 3.20 | Parabolrinnen |
| 3.5 | Steilförderer | 3.21 | Notkühler |
| 3.6 | Schubbodenbunker | 3.22 | Wärmetauscher (KoVoWä) |
| 3.7 | Austragungsschnecke | 3.23 | Druckwasser (5 bar) |
| 3.8 | Trogkettenförderer | 3.24 | Wärmetauscher (Luvo 1) (Option) |
| 3.9 | Kessel | 3.25 | Turbine |
| 3.10 | Nassentschlacker | 3.26 | Turbine |
| 3.11 | Schlacke | 3.27 | Luko (Sommerbetrieb) |
| 3.12 | Multiklon | 3.28 | Fernwärme (17,5 MW) |
| 3.13 | Ca(OH)₂ (Option) | 3.29 | Rücklauf |
| 3.14 | Gewebefilter | 3.30 | Vorwärmung |
| 3.15 | Silo, Flugstaub | 3.31 | Speisewasser |
| 3.16 | Thermalöl-WT | 3.32 | HD-Vorwärmer |

## Patentansprüche

1. Verfahren zur Nutzung der Wärme im unteren Temperaturbereich bis 1000 °C, vorzugsweise bis 500 °C zur Vorwärmung der Frischluft, die einer Feststofffeuerung, vorzugsweise ausgeführt als Rostfeuerung mit unterstöchiometrischer Verbrennung und einer Frischluftzugabe in mehreren Stufen oder die einer zirkulierenden Wirbelschichtfeuerung (ZWS) zugegeben wird.

2. Verfahren nach Anspruch 1, **dadurch gekennzeichnet, dass** die in den Verbrennungsprozess eingebrachte Wärme zusammen mit Brennstoffenergie zur Überhitzung von Dampf eines dritten Prozesses oder des gleichen Prozesses des Abwärmespenders verwendet wird.

3. Verfahren nach Anspruch 1 oder 2, **dadurch gekennzeichnet, dass** Festbrennstoffe, vorzugsweise Biomasse, Industrie- oder kommunale Abfälle, Kohle oder Mischungen der vorgenannten Stoffe verbrannt werden.

4. Verfahren nach einem der Ansprüche 1 bis 3, **dadurch gekennzeichnet, dass** in maximal fünf Stufen vorgewärmte Frischluft einer Rostfeuerung zugegeben wird.

5. Verfahren nach einem der Ansprüche 1 bis 4, **dadurch gekennzeichnet, dass** zur Vorwärmung der Frischluft Geothermie-, Solarthermie- Wärme aus der Abfallverbrennung, Kernenergie oder Abwärmeenergie aus exotermen Prozessen verwendet wird.

6. Verfahren nach einem der Ansprüche 1 bis 5, **dadurch gekennzeichnet, dass** die Vorwärmung der Luft auf 350 °C -1000 °C erfolgt.

7. Verfahren nach einem der Ansprüche 1 - 5, **dadurch gekennzeichnet, dass** Thermalöl oder Salzschmelzen als Wärmeverschubsystem zur weiteren Frischluftvorwärmung genutzt werden.
